# EUROPEAN PATENT SPECIFICATION

(11) **EP 4 506 812 B1**
(45) Date of publication and mention of the grant of the patent: **29.07.2026**
(21) Application number: 23852695.8
(22) Date of filing: 02.06.2023
(51) Int. Cl.: G06F 8/65, G06F 8/71, G06F 1/3212, G06F 9/4401, G06F 9/448, G06F 9/48, G06F 1/3203, G06F 1/26, H02J 50/10, H02J 50/80, H02J 7/42, H02J 7/70

(54) **ELECTRONIC DEVICE AND CHARGING DEVICE FOR PROVIDING UPDATE FUNCTION OF FIRMWARE PROGRAM, AND CONTROL METHOD THEREFOR**
ELEKTRONISCHE VORRICHTUNG UND LADEVORRICHTUNG ZUR BEREITSTELLUNG EINER AKTUALISIERUNGSFUNKTION EINES FIRMWARE-PROGRAMMS UND STEUERUNGSVERFAHREN DAFÜR
DISPOSITIF ÉLECTRONIQUE ET DISPOSITIF DE CHARGE PERMETTANT DE FOURNIR UNE FONCTION DE MISE À JOUR D'UN PROGRAMME DE MICROLOGICIEL, ET PROCÉDÉ DE COMMANDE ASSOCIÉ

(30) Priority: 09.08.2022 KR 20220099107; 25.08.2022 KR 20220107057
(43) Date of publication of application: 12.02.2025
(73) Proprietor: Samsung Electronics Co., Ltd., Suwon-si, Gyeonggi-do 16677 (KR)
(72) Inventor: LEE, Jaesung, Suwon-si Gyeonggi-do 16677 (KR); WOO, Inmyung, Suwon-si Gyeonggi-do 16677 (KR); LEE, Seungho, Suwon-si Gyeonggi-do 16677 (KR)
(74) Representative: Walaski, Jan Filip
(86) International application number: PCT/KR2023/007590
(87) International publication number: WO 2024/034803

(56) References cited:
- JP-B2- 6 965 034
- KR-B1- 101 452 575
- KR-B1- 102 053 272
- KR-B1- 102 218 242
- US-A1- 2016 306 616
- US-A1- 2017 237 294

## Description

### TECHNICAL FIELD

The following disclosure relates to an electronic device and a charging device for providing an update function of a firmware program and a method of controlling the electronic device and the charging device.

### BACKGROUND ART

The software of electronic devices, such as smartphones and Bluetooth devices, requires continuous firmware updates even after a product is released to maintain stable performance and fix bugs. Firmware program updates may be based on information related to firmware binary within an electronic device or information related to firmware binary on the firmware over-the-air (FOTA) server.
US 2016/0306616 A1 discloses a firmware update of a USB device.

### DISCLOSURE OF THE INVENTION

### TECHNICAL SOLUTIONS

According to an aspect of the invention, there is provided an electronic device as set out in claim 1, a charging device as set out in claim 7, a method of controlling an electronic device as set out in claim 12 and a method of controlling a charging device asset out in claim 13. According to an embodiment, an electronic device includes a communication module including signal lines configured to transmit a signal to and to receive a signal from a charging device when connected to the charging device, a memory configured to store computer-executable instructions, and a processor configured to execute the computer-executable instructions by accessing the memory. The processor may be configured to perform, when a connection between the charging device and the electronic device is detected, receiving version information of a firmware program installed on the charging device from the charging device via the signal lines, when the version information of the firmware program of the charging device is different from reference version information, transmitting a notification signal for updating the firmware program to the charging device to cause the charging device to switch a signal transmission/reception mode of the charging device from a power signal transmission/reception mode to a data signal transmission mode, and transmitting update data of the firmware program to the charging device via the signal lines.

According to an embodiment, a charging device includes a communication module including signal lines configured to transmit a signal to and to receive a signal from an electronic device when connected to the electronic device, a memory configured to store computer-executable instructions, and a processor configured to execute the computer-executable instructions by accessing the memory. The processor may be configured to perform transmitting version information of a firmware program installed on the charging device to the electronic device, when receiving a notification signal for updating the firmware program from the electronic device, switching a signal transmission/reception mode for the signal lines from a power signal transmission/reception mode to a data signal transmission/reception mode, receiving update data of the firmware program from the electronic device, and updating, based on the received update data, a firmware program of the charging device.

According to an embodiment, a method of controlling an electronic device includes, when a connection between a charging device and the electronic device is detected, receiving, from the charging device, version information of a firmware program installed on the charging device, when the version information of the firmware program of the charging device is different from reference version information, transmitting a notification signal for updating the firmware program to the charging device to cause the charging device to switch a signal transmission/reception mode for signal lines, and transmitting, to the charging device, update data of the firmware program through signal lines of which the signal transmission/reception mode is switched.

The method may further include downloading the reference version information from an external server.

The transmitting of update data of the firmware program to the charging device may be performed when a cover of the charging device is closed, a charged amount of the electronic device is greater than or equal to a predetermined reference value, and a charged amount of the charging device is greater than or equal to a predetermined reference value.

According to an embodiment, a method of controlling a charging device includes, when a notification signal for updating a firmware program is received from an electronic device, switching a signal transmission/reception mode for signal lines included in a communication module from a power signal transmission/reception mode to a data signal transmission/reception mode, receiving update data of the firmware program from the electronic device, and updating, based on the received update data, a firmware program of the charging device.

The switching of the signal transmission/reception mode for the signal lines included in the communication module from the power signal transmission/reception mode to the data signal transmission/reception mode may include lowering a transmittable voltage level of a power line included in the signal lines to a predetermined range or less.

The switching of the signal transmission/reception mode of the signal lines included in the communication module from the power signal transmission/reception mode to the data signal transmission/reception mode may be performed when a cover of the charging device is closed.

The receiving of the update data of the firmware program from electronic device may be performed when the cover of the charging device is closed, a charged amount of a battery of the electronic device is greater than or equal to a predetermined reference value, and a charged amount of a battery of the charging device is greater than or equal to a predetermined reference value.

The receiving of the update data of the firmware program from the electronic device may be performed when the cover of the charging device is closed.

### BRIEF DESCRIPTION OF THE DRAWINGS

FIG. 1 is a block diagram of an electronic device in a network environment, according to an embodiment.
FIG. 2 is a block diagram illustrating an operational concept of an electronic device for updating a firmware program, according to an embodiment.
FIG. 3 is a flowchart illustrating an operation of transmitting firmware update data from an electronic device for updating a firmware program to a charging device, according to an embodiment.
FIG. 4 is a flowchart illustrating an operation of a charging device to perform an update by receiving firmware update data from an electronic device for updating a firmware program, according to an embodiment.
FIG. 5 is a flowchart illustrating an operation of updating a firmware program of a charging device, according to an embodiment.
FIG. 6 is a block diagram illustrating a configuration of an electronic device for updating a firmware program, according to an embodiment.
FIG. 7 is a block diagram illustrating a configuration of a charging device of an electronic device for updating a firmware program, according to an embodiment.

### BEST MODE FOR CARRYING OUT THE INVENTION

To charge an electronic device, it may be essential to connect two pins, a power line and a ground line, between a charging device of an electronic device and the electronic device being charged. Using power line communication (PLC) data communication over the power line may not only improve charging efficiency but also enable the transmission of additional data.

Conventional PLC communication technology focuses on data communication for efficient charging between an electronic device and a charging device of the electronic device using a power line and a ground line. However, in this case, issues with contact between the power line and the ground line or external noise cause the data transmission speed to be slow and unstable, making it difficult to reliably transmit large amounts of data. Additionally, while it is possible to wirelessly upgrade the firmware program embedded in an electronic device using firmware over-the-air (FOTA) technology when there is an issue with the electronic device during charging, there is an issue that the firmware program cannot be upgraded wirelessly when the issue is with the charging device of the electronic device. In this case, although data may be transmitted to the charging device of the electronic device via PLC communication, the data transmission speed is slow and unstable when using communication via a power line, as previously mentioned, making it difficult to address issues with the charging device of the electronic device.

Herein, according to an electronic device for updating a firmware program and a method of controlling the electronic device, when there is a need to address issues with the charging device of the electronic device or upgrade the performance of the charging device, a method is proposed for optimizing a power line for data transmission and addressing issues with the charging device of the electronic device.

Hereinafter, examples will be described in detail with reference to the accompanying drawings. When describing the embodiments with reference to the accompanying drawings, like reference numerals refer to like elements and any repeated description related thereto will be omitted.

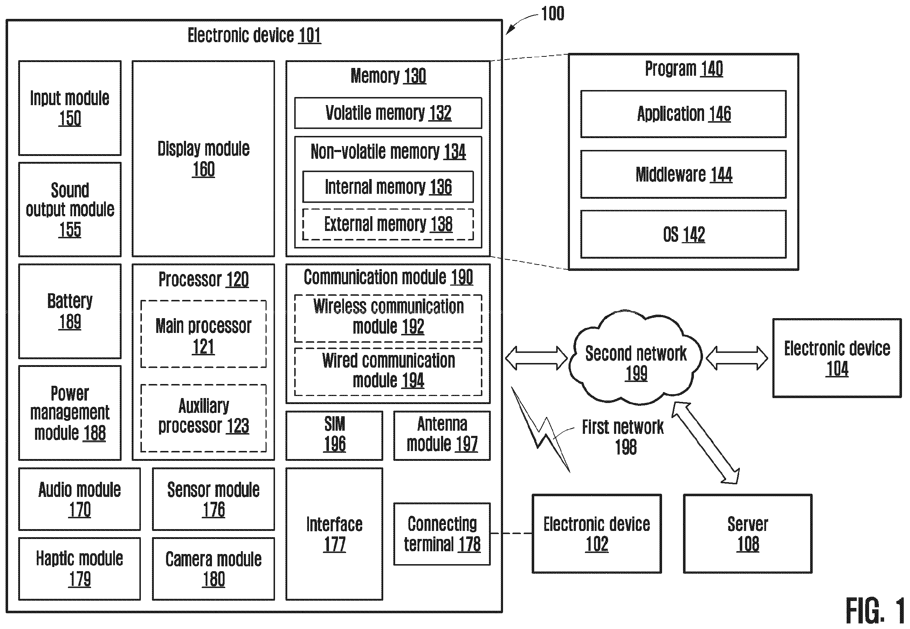

FIG. 1 is a block diagram of an electronic device 101 in a network environment 100, according to various embodiments. Referring to FIG. 1, the electronic device 101 in the network environment 100 may communicate with an electronic device 102 via a first network 198 (e.g., a short-range wireless communication network) or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computation. According to an embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an assistance processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the electronic device 101 includes the main processor 121 and the assistance processor 123, the assistance processor 123 may be adapted to consume less power than the main processor 121 or to be specific to a specified function. The auxiliary processor 123 may be implemented separately from the main processor 121 or as a portion of the main processor 121.

The assistance processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is in an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence (AI) model processing. An AI model may be generated by machine learning. Such learning may be performed by, for example, the electronic device 101 in which AI is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited thereto. The AI model may additionally or alternatively include a software structure other than the hardware structure.

The memory 130 may store various pieces of data used by at least one component (e.g., the processor 120 or the sensor module 176) of the electronic device 101. The data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 may receive, from the outside (e.g., a user) of the electronic device 101, a command or data to be used by another component (e.g., the processor 120) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to sense a touch, or a pressure sensor adapted to measure the intensity of force incurred by the touch.

The audio module 170 may convert a sound into an electric signal or vice versa. According to an embodiment, the audio module 170 may obtain the sound via the input module 150 or output the sound via the sound output module 155 or a charging device (e.g., the electronic device 102 such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be connected to the external electronic device (e.g., the electronic device 102) directly or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently of the processor 120 (e.g., an AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may identify or authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., an mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to various embodiments, the antenna module 197 may form a mmWave antenna module. According to an embodiment, the mmWave antenna module may include a PCB, an RFIC disposed on a first surface (e.g., the bottom surface) of the PCB or adjacent to the first surface and capable of supporting a designated high-frequency band (e.g., a mmWave band), and a plurality of antennas (e.g., array antennas) disposed on a second surface (e.g., the top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 connected to the second network 199. Each of the external electronic devices 102 or 104 may be a device of the same type as or a different type from the electronic device 101. According to an embodiment, all or some of operations to be executed by the electronic device 101 may be executed by one or more external electronic devices (e.g., the external devices 102 and 104, or the server 108). For example, if the electronic device 101 needs to perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and may transfer a result of the performance to the electronic device 101. The electronic device 101 may provide the result, with or without further processing the result, as at least part of a response to the request. To that end, cloud computing, distributed computing, mobile edge computing (MEC), or client-server computing technology may be used, for example. The electronic device 101 may provide ultra low-latency services using, e.g., distributed computing or MEC. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., a smart home, a smart city, a smart car, or healthcare) based on 5G communication technology or IoT-related technology. The server 108 may be FOTA that contains information for wirelessly upgrading a firmware program of the electronic device.

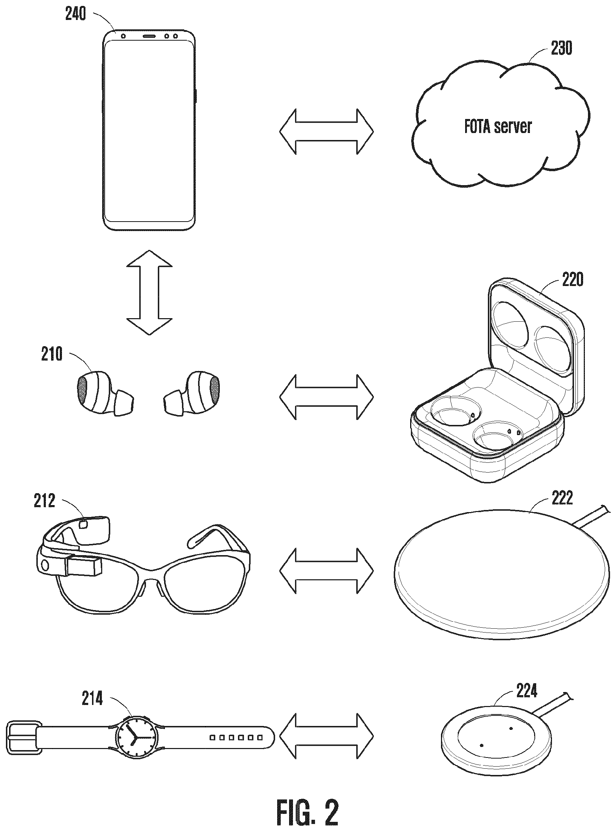

In an embodiment, the electronic device 101 may be a wearable device (e.g., wireless earphones, augmented reality (AR) glasses, and a smart watch). When the electronic device 101 is a wireless earphone, the electronic device 101 is a true wireless stereo (TWS) device and may output a sound from the sound output module 155 using data received from the connected external electronic device 102. The electronic device 101 may transmit voice received from the external electronic device 102 through the input module 150. However, the electronic device 101 for updating the firmware program according to an embodiment of the present disclosure is not limited to wireless earphones and may be any electronic device related to a firmware update of an electronic device driven by firmware, such as an AR device (e.g., an electronic device 212 of FIG. 2), such as AR glasses, and a smart watch (e.g., an electronic device 214 of FIG. 2), and a corresponding charging device (e.g., charging devices 220, 222, and 224 of FIG. 2).

In an embodiment, the external electronic device 102 may be a charging device (e.g., a cradle). The electronic device 101 may be electrically connected to the external electronic device 102 through signal lines. In an embodiment, when the electronic device 101 is electrically connected to a cradle while paired with a user terminal (not shown), the pairing with the user terminal is terminated, and the electronic device 101 may charge the battery 189 using power supplied from the cradle.

In an embodiment, the external electronic device 102 (e.g., the electronic device 102) may include a cover. The cover may open or close an accommodation part in which the electronic device 101 is combined with the charging device and seated depending on an operation.

FIG. 2 is a block diagram illustrating an operational concept of an electronic device for updating a firmware program, according to an embodiment.

Referring to FIG. 2, an electronic device 210 according to an embodiment may be connected to a charging device 220 through a communication module including signal lines for transmitting and receiving a signal from and to the charging device 220 when connected to the charging device 220. The charging device 220 may charge the power of the electronic device 210 through a predefined technique. However, when firmware program version information between the charging device 220 and the electronic device 210 does not match, there may be an issue where the electronic device 210 is not charged smoothly. To update the version information of the firmware program and to facilitate charging, the signal lines may be operated in either a power signal transmission/reception mode for transmitting and receiving a power signal to and from the charging device 220 or a data signal transmission/reception mode for transmitting and receiving a data signal to and from the charging device 220. While connected to the charging device 220, the electronic device 210 may operate the signal lines in the power signal transmission/reception mode to charge the battery of the electronic device 210. However, when the version information of the firmware program installed on the charging device 220 is received and the firmware program of the charging device 220 needs to be updated, the electronic device 210 may operate the signal lines in the data signal transmission/reception mode to update the firmware program of the charging device 220. In this case, the electronic device 210 may detect a connection with the charging device 220 and receive the version information of the firmware program installed on the charging device 220 from the charging device 220 through the signal lines. When the version information of the firmware program of the charging device 220 is different from reference version information of the electronic device 210, the electronic device 210 may transmit a notification signal for updating the firmware program to the charging device 220 to cause the charging device 220 to switch the signal transmission/reception mode for the signal lines. The charging device 220 may switch a signal line to the signal transmission/reception mode such that the signal line is optimized for data transmission related to data for updating the firmware program. The charging device 220 that receives data (e.g., new firmware program data) for updating the firmware program through a signal line may update the firmware program of the charging device 220. In an embodiment, the reference version information may correspond to version information of update data of the firmware program. In an embodiment, the transmission of update data of the firmware program between the electronic device 210 and the charging device 220 may be performed when the cover of the charging device 220 is closed such that a stable contact is established between the electronic device 210 and the charging device 220, a charged amount of the battery of the electronic device 210 is greater than or equal to a predetermined reference value, and a charged amount of the battery of the charging device 220 is greater than or equal to a predetermined reference value. In an embodiment, for example, the reference version information may exist within the electronic device 210, but the electronic device 210 according to an embodiment of the present disclosure may also download the reference version information from an external FOTA server 230 for wirelessly upgrading the firmware program of the electronic device 210. In this case, the FOTA server may compare the existing firmware program with the new version of the firmware program and provide the electronic device 210 with an update package (Delta file) obtained by extracting only the different parts via a wireless network. In an embodiment, a user terminal 240 may communicate with the FOTA server 230 to provide the reference version information to the electronic device 210. Alternatively, the electronic device 210 may directly communicate with the FOTA server 230 through the communication module of the electronic device 210 without going through the user terminal 240 to download the reference version information. The electronic device 210 for updating the firmware program according to an embodiment of the present disclosure is not limited to wireless earphones and may be any electronic device related to a firmware update of an electronic device driven by firmware, such as an AR device (e.g., the electronic device 212 of FIG. 2), such as AR glasses, and a smart watch (e.g., the electronic device 214 of FIG. 2), and a corresponding charging device (e.g., the charging devices 220, 222, and 224 of FIG. 2).

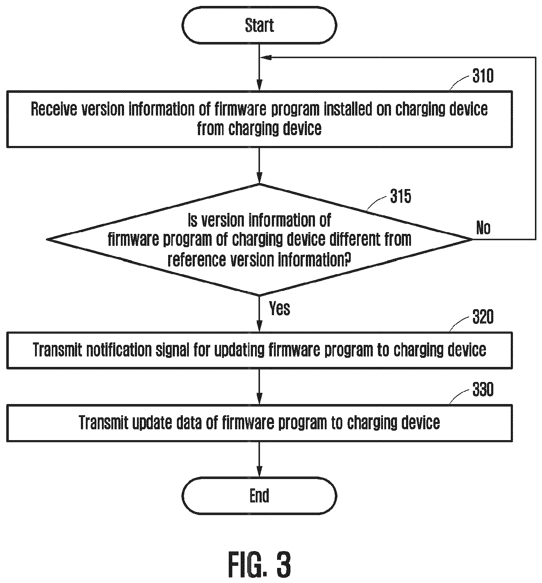

FIG. 3 is a flowchart illustrating an operation of transmitting firmware update data from an electronic device for updating a firmware program to a charging device, according to an embodiment.

Referring to FIG. 3, in an embodiment, the electronic device may receive version information of the firmware program installed on the charging device from the charging device in operation 310. For example, the electronic device may receive version information of a firmware program installed on a charging device via signal lines when a contact is established with the charging device. In this case, the signal lines may be in a power signal transmission/reception mode for transmitting and receiving a power signal of the charging device via the signal lines.

In an embodiment, the electronic device may determine whether version information of the firmware program of the charging device is different from reference version information in operation 315. For example, the electronic device may compare the version information of the firmware program of the charging device with the reference version information located within the electronic device or on a FOTA server.

In an embodiment, the electronic device may transmit a notification signal for updating the firmware program to the charging device in operation 320. For example, the electronic device may transmit, to the charging device, the notification signal for updating the firmware program such that the charging device may switch a signal transmission/reception mode for signal lines to smoothly receive update data of the firmware program via the signal lines.

In an embodiment, the electronic device may transmit update data of the firmware program to the charging device in operation 330. For example, in order to ensure stable data transmission, the electronic device may transmit the update data of the firmware program to the charging device when the cover of the charging device is closed, a charged amount of the battery of the electronic device is greater than or equal to a predetermined reference value, and a charged amount of the battery of the charging device is greater than or equal to a predetermined reference value. In an embodiment, the electronic device may further perform a recovery operation to correct an error when there is an error in the transmission of the update data of the firmware program.

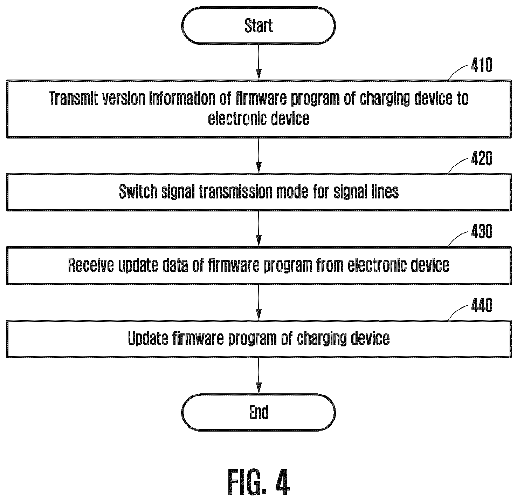

FIG. 4 is a flowchart illustrating an operation of a charging device to perform an update by receiving firmware update data from an electronic device for updating a firmware program, according to an embodiment.

Referring to FIG. 4, in an embodiment, the charging device may transmit version information of the firmware program of the charging device to the electronic device in operation 410. For example, when connected to the electronic device, the charging device may transmit the version information of the firmware program of the charging device through a communication module including signal lines for transmitting and receiving a signal to and from the electronic device.

In an embodiment, the charging device may switch a signal transmission/reception mode for the signal lines in operation 420. For example, the charging device may switch a signal transmission/reception mode for a power line included in a signal line after stopping charging of the electronic device to prevent stability degradation due to charging and external noise when transmitting data via the signal lines.

In an embodiment, the charging device may receive update data of the firmware program from the electronic device in operation 430. For example, in order to ensure stable data transmission, the charging device may receive the update data of the firmware program from the electronic device when the cover of the charging device is closed while the charging device and the electronic device are grounded, the battery of the electronic device is greater than or equal to a predetermined range, and the battery of the charging device is greater than or equal to a predetermined range.

In an embodiment, the charging device may update the firmware program of the charging device in operation 440. For example, the charging device may update, based on the update data of the received firmware program, the firmware program of the charging device and match firmware version information of the charging device to reference version information.

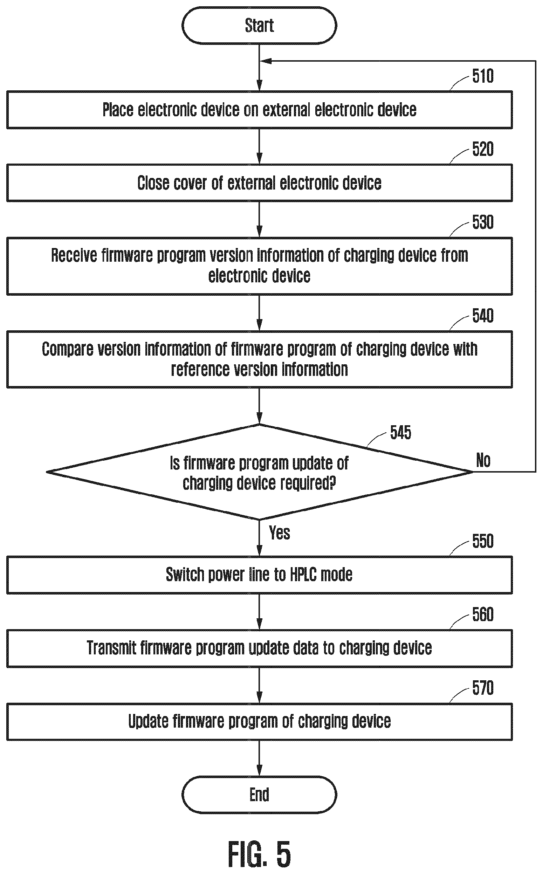

FIG. 5 is a flowchart illustrating an operation of updating a firmware program of a charging device, according to an embodiment.

Referring to FIG. 5, in an embodiment, in operation 510, an electronic device may be placed on the charging device. In this case, the electronic device may be a wireless earphones product, while the charging device may correspond to a charging device (e.g., a cradle). However, the embodiments of the present disclosure are not limited to the application to the particular products described above and may be applied without limitation to general electronic devices requiring firmware updates, such as an AR device such as AR glasses and a smart watch.

In an embodiment, in operation 520, after the electronic device is placed on the charging device, an operation of closing the cover of the charging device may be performed. As the cover of the charging device is closed, the contact between the electronic device and the charging device is stably established. Thus, the transmission and reception of a power signal and a data signal via signal lines may be smoothly performed. The embodiments of the present disclosure are applicable not only to a particular product in which the transmission and reception of a data signal is performed only when the cover of the charging device is closed after the electronic device is placed but also to other products in which the transmission and reception of a data signal between the electronic device and the charging device are performed even when a cover is not closed or in which no separate cover exists. In this case, operation 510 in which the electronic device is placed on the charging device and operation 520 in which the cover of the charging device is closed may not be selectively performed depending on the product.

In an embodiment, in operation 530, firmware program version information of the charging device may be received from the electronic device. The charging device may transmit, to the electronic device via signal lines, firmware program version information related to, for example, charging of the electronic device.

In an embodiment, an operation of comparing the version information of the firmware program of the charging device with reference version information may be performed in operation 540. The electronic device may compare the version information of the firmware program of the charging device with the reference version information located within the electronic device or on a FOTA server. For example, the reference version information may correspond to version information of update data of the firmware program.

In an embodiment, in operation 545, the electronic device may determine whether a firmware program update of the charging device is required. For example, the electronic device may determine that the firmware program update of the charging device is required when the version information of the firmware program of the charging device does not match the reference version information.

In an embodiment, in operation 550, the charging device may switch a power line included in the signal lines to a so-called high-speed power line communication (HPLC) mode. For example, the HPLC mode may be an operation that lowers a transmittable voltage level of a power line to a predetermined range or less to facilitate data transmission. In an embodiment, for example, when the power line included in the signal lines is switched to the HPLC mode, an operation of the charging device to charge the electronic device may be deactivated to maintain the transmittable voltage level of the power line of the charging device.

In an embodiment, in operation 560, the electronic device may transmit firmware program update data to the charging device. For example, the electronic device may transmit the firmware program update data to the charging device when the power line included in the signal lines is in the HPLC mode. For example, in order to ensure stable transmission of the firmware program update data, the electronic device may transmit the firmware program update data to the charging device when the cover of the charging device is closed while the charging device and the electronic device are grounded, the battery of the electronic device is greater than or equal to a predetermined range, and the battery of the charging device is greater than or equal to a predetermined range.

In an embodiment, in operation 570, the charging device may update a firmware program. For example, the charging device may update the firmware program of the charging device, based on the update data of the firmware program received from the electronic device via the power line in the so-called HPLC mode, which lowers the transmittable voltage level of the power line to a predetermined range or less.

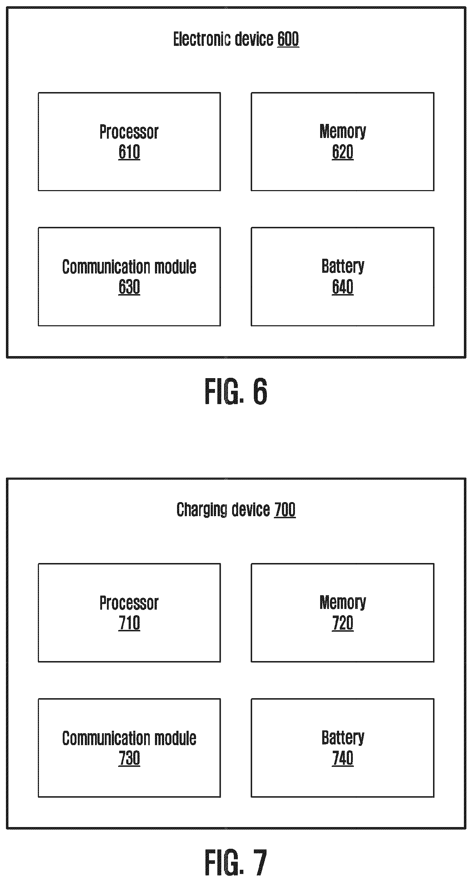

FIG. 6 is a block diagram illustrating a configuration of an electronic device for updating a firmware program, according to an embodiment.

Referring to FIG. 6, according to an embodiment, an electronic device 600 for updating a firmware program may be a wireless earphones product. However, the embodiments of the present disclosure are not limited to the application to the particular products described above but may be applied to all electronic devices 600 required for updating a firmware program.

According to an embodiment, an electronic device (e.g., the electronic device 101 of FIG. 1, the electronic device 210 of FIG. 2, and the electronic device 600 of FIG. 6) for updating a firmware program may include a communication module (e.g., the communication module 190 of FIG. 1 and a communication module 630 of FIG. 6) including signal lines for transmitting and receiving a signal to and from a charging device (e.g., the charging device 220 of FIG. 2 and a charging device 700 of FIG. 7) when connected to the charging device. The electronic device may further include a memory (e.g., 130 of FIG. 1 and 620 of FIG. 6) in which computer-executable instructions are stored. The electronic device may further include a processor (e.g., the processor 120 of FIG. 1 and a processor 610 of FIG. 6) that executes the instructions by accessing the memory. The processor may perform an operation of receiving version information of a firmware program installed on the charging device 220, 222, 224, 700 from the charging device 220, 222, 224, 700 via signal lines when a connection between the charging device 220, 222, 224, 700 and the electronic device 101, 210, 212, 214, 600 is detected. The processor may further perform an operation of transmitting a notification signal for updating the firmware program to the charging device 220, 222, 224, 700 to cause the charging device 220, 222, 224, 700 to switch a signal transmission/reception mode of the charging device 220, 222, 224, 700 from a power signal transmission/reception mode to a data signal transmission mode when version information of the firmware program of the charging device 220, 222, 224, 700 is different from reference version information. The processor may further perform an operation of transmitting update data of the firmware program to the charging device 220, 222, 224, 700 via the signal lines.

In an embodiment, the electronic device 101, 210, 212, 214, 600 may transmit and receive a power signal to and from the charging device 220, 222, 224, 700 via the signal lines when the signal transmission/reception mode is the power signal transmission/reception mode and may transmit and receive a data signal to and from the charging device 220, 222, 224, 700 via the signal lines when the signal transmission/reception mode is the data signal transmission/reception mode.

In an embodiment, the electronic device 101, 210, 212, 214, 600 may reduce the maximum permitted voltage level of the signal lines and stop transmitting and receiving a power signal when the signal transmission/reception mode is a data signal transmission mode.

In an embodiment, the electronic device 101, 210, 212, 214, 600 may perform an operation of transmitting update data of the firmware program to the charging device 220, 222, 224, 700 when the cover of the charging device 220, 222, 224, 700 is closed, a charged amount of a battery 189, 640 of the electronic device 101, 210, 212, 214, 600 is greater than or equal to a predetermined reference value, and a charged amount of a battery 189, 740 of the charging device 220, 222, 224, 700 is greater than or equal to a predetermined reference value.

In an embodiment, the processor 120, 610 may further perform an operation of downloading reference version information from an external server 108, 230.

In an embodiment, the reference version information may correspond to version information of update data of the firmware program stored in the electronic device 101, 210, 212, 214, 600.

According to an embodiment, a method of controlling an electronic device (e.g., the electronic device 101 of FIG. 1, the electronic device 210 of FIG. 2, and the electronic device 600 of FIG. 6) for updating a firmware program may include an operation of receiving version information of a firmware program installed on a charging device 220, 222, 224, 700 from the charging device 220, 222, 224, 700 when a connection between the charging device 220, 222, 224, 700 and the electronic device 101, 210, 212, 214, 600 is detected. The method of controlling the electronic device may further include an operation of transmitting a notification signal for updating the firmware program to the charging device 220, 222, 224, 700 to cause the charging device 220, 222, 224, 700 to switch a signal transmission/reception mode for signal lines when the version information of the firmware program of the charging device 220, 222, 224, 700 is different from the reference version information. The method may further include an operation of transmitting update data of the firmware program to the charging device 220, 222, 224, 700 via the signal lines of which signal transmission/reception mode is switched.

According to an embodiment, the method of controlling the electronic device for updating the firmware program may further include an operation of downloading the reference version information from an external server 108, 230.

The transmitting of the update data of the firmware program to the charging device 220, 222, 224, 700 may be performed when the cover of the charging device 220, 222, 224, 700 is closed, a charged amount of the battery 189, 640 of the electronic device 101, 210, 212, 214, 600 is greater than or equal to a predetermined reference value, and a charged amount of the battery 189, 740 of the charging device 220, 222, 224, 700 is greater than or equal to a predetermined reference value.

FIG. 7 is a block diagram illustrating a configuration of a charging device of an electronic device for updating a firmware program, according to an embodiment.

Referring to FIG. 7, according to an embodiment, a charging device 700 for updating a firmware program may be a wireless charging device (e.g., a cradle). However, the embodiments of the present disclosure are not limited to the application to the particular products described above but may be applied to all charging devices 700 required for updating the firmware program.

According to an embodiment, a charging device (e.g., the electronic device 102 of FIG. 1, the charging device 220 of FIG. 2, and the charging device 700 of FIG. 7) for updating a firmware program may include a communication module 190, 730 including signal lines for transmitting and receiving signals to and from an electronic device 101, 210, 212, 214, 600 when connected to the electronic device 101, 210, 212, 214, 600. The charging device may further include a memory 720 in which computer-executable instructions are stored. The charging device may further include a processor 120, 710 for executing the instructions by accessing the memory. The processor 120, 710 may perform an operation of transmitting version information of a firmware program installed on the charging device 220, 222, 224, 700 to the electronic device 101, 210, 212, 214, 600.

The processor 120, 710 may further perform an operation of switching a signal transmission/reception mode for signal lines from a power signal transmission/reception mode to a data signal transmission/reception mode when receiving a notification signal for updating a firmware program from the electronic device 101, 210, 212, 214, 600. The processor 120, 710 may further perform an operation of receiving update data of the firmware program from the electronic device 101, 210, 212, 214, 600. The processor 120, 710 may further perform an operation of updating the firmware program of the charging device 220, 222, 224, 700 based on the received update data.

The charging device 220, 222, 224, 700 may transmit and receive a power signal to and from the electronic device 101, 210, 212, 214, 600 via the signal lines when the signal transmission/reception mode is the power signal transmission/reception mode and may transmit and receive a data signal to and from the electronic device 101, 210, 212, 214, 600 via the signal lines when the signal transmission/reception mode is the data signal transmission/reception mode.

The charging device 220, 222, 224, 700 may reduce the maximum permitted voltage level of the signal lines and stop transmitting and receiving a power signal when the signal transmission/reception mode is the data signal transmission mode.

The charging device 220, 222, 224, 700 may perform an operation of switching the signal transmission/reception mode for the power line when the cover of the charging device 220, 222, 224, 700 is closed.

The charging device 220, 222, 224, 700 may perform an operation of switching the signal transmission/reception mode for the signal lines from the power signal transmission/reception mode to the data signal transmission/reception mode after the charging device 220, 222, 224, 700 stops charging the electronic device 101, 210, 212, 214, 600.

The charging device 220, 222, 224, 700 may perform an operation of receiving update data of the firmware program from the electronic device 101, 210, 212, 214, 600 when the cover of the charging device 220, 222, 224, 700 is closed, a charged amount of the battery 189, 640 of the electronic device 101, 210, 212, 214, 600 is greater than or equal to a predetermined reference value, and a charged amount of the battery 189, 740 of the charging device 220, 222, 224, 700 is greater than or equal to a predetermined reference value.

According to an embodiment, a method of controlling a charging device of an electronic device for updating a firmware program may include an operation of switching a signal transmission/reception mode for signal lines included in a communication module 190, 730 from a power signal transmission/reception mode to a data signal transmission/reception mode when a notification signal for updating a firmware program is received from the electronic device 101, 210, 212, 214, 600. The method of controlling the charging device may further include an operation of receiving update data of the firmware program from the electronic device 101, 210, 212, 214, 600. The method of controlling the charging device may further include an operation of updating the firmware program of the charging device 220, 222, 224, 700, based on the received update data.

The operation of switching the signal transmission/reception mode for the signal lines included in the communication module 190, 730 from the power signal transmission/reception mode to the data signal transmission/reception mode may include an operation of lowering a transmittable voltage level of a power line included in the signal lines to a predetermined range or less.

The operation of switching the signal transmission/reception mode for the signal lines included in the communication module 190, 730 from the power signal transmission/reception mode to the data signal transmission/reception mode may be performed when the cover of the charging device 220, 222, 224, 700 is closed.

The operation of receiving update data of the firmware program from the electronic device 101, 210, 212, 214, 600 may be performed when the cover of the charging device 220, 222, 224, 700 is closed, a charged amount of a battery 189, 640 of the electronic device 101, 210, 212, 214, 600 is greater than or equal to a predetermined reference value, and a charged amount of a battery 189, 740 of the charging device 220, 222, 224, 700 is greater than or equal to a predetermined reference value.

The electronic device according to various embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the present disclosure, the electronic device is not limited to those described above.

With regard to the description of the drawings, similar reference numerals may be used to refer to similar or related components. It is to be understood that a singular form of a noun corresponding to an item may include one or more of the things, unless the relevant context clearly indicates otherwise. As used herein, "A or B," "at least one of A and B," "at least one of A or B," "A, B or C," "at least one of A, B and C," and "at least one of A, B, or C," may include any one of the items listed together in the corresponding one of the phrases, or all possible combinations thereof. Terms such as "1st" and "2nd," or "first" and "second" may be used to simply distinguish a corresponding component from other components, and do not limit the components in other aspects (e.g., importance or order). It is to be understood that if a component (e.g., a first component) is referred to, with or without the term "operatively" or "communicatively," as "coupled with," "coupled to," "connected with," or "connected to" another component (e.g., a second component), the component may be coupled with the other component directly (e.g., by wire), wirelessly, or via a third component.

As used in connection with various embodiments of the present disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the present disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 210; 212; 214; 600) comprising:
a communication module (190; 630) comprising signal lines configured to transmit a signal to and to receive a signal from a charging device (220; 222; 224; 700) when connected to the charging device (220; 222; 224; 700);
a memory (130; 620) configured to store computer-executable instructions; and
a processor (120; 610) configured to execute the computer-executable instructions by accessing the memory,
wherein the processor (120; 610) is configured to perform:
when a connection between the charging device (220; 222; 224; 700) and the electronic device (101; 210; 212; 214; 600) is detected, receiving version information of a firmware program installed on the charging device (220; 222; 224; 700) from the charging device (220; 222; 224; 700) via the signal lines;
when the version information of the firmware program of the charging device (220; 222; 224; 700) is different from reference version information, transmitting a notification signal for updating the firmware program to the charging device (220; 222; 224; 700) to cause the charging device (220; 222; 224; 700) to switch a signal transmission/reception mode of the charging device (220; 222; 224; 700) from a power signal transmission/reception mode to a data signal transmission mode; and
transmitting update data of the firmware program to the charging device (220; 222; 224; 700) via the signal lines,
wherein the electronic device (101; 210; 212; 214; 600) is configured to:
when the signal transmission/reception mode is the data signal transmission/reception mode, transmit and receive a data signal to and from the charging device (220; 222; 224; 700) via the signal lines, reduce a maximum permitted voltage level of the signal lines and stop transmitting and receiving a power signal to and from the charging device (220; 222; 224; 700).

2. The electronic device of claim 1, wherein the electronic device (101; 210; 212; 214; 600) is configured to:
when the signal transmission/reception mode is the power signal transmission/reception mode, transmit and receive the power signal to and from the charging device (220; 222; 224; 700) via the signal lines.

3. The electronic device of claim 1, wherein the electronic device (101; 210; 212; 214; 600) is configured to,
when a charged amount of a battery (189; 640) of the electronic device (101; 210; 212; 214; 600) is greater than or equal to a predetermined reference value and
when a charged amount of a battery (189; 740) of the charging device (220; 222; 224; 700) is greater than or equal to a predetermined reference value,
transmit the update data of the firmware program to the charging device (220; 222; 224; 700).

4. The electronic device of claim 2 or 3, wherein the electronic device (101; 210; 212; 214; 600) is configured to, when a cover of the charging device (220; 222; 224; 700) is closed, perform transmitting the update data of the firmware program to the charging device (220; 222; 224; 700).

5. The electronic device of any one of claims 1 to 4, wherein the processor (120; 610) is further configured to perform downloading the reference version information from an external server (108; 230).

6. The electronic device of any one of claims 1 to 5, wherein the reference version information corresponds to version information of update data of a firmware program stored in the electronic device (101; 210; 212; 214; 600).

7. A charging device (220; 222; 224; 700) comprising:
a communication module (190; 730) comprising signal lines configured to transmit a signal to and to receive a signal from an electronic device (101; 210; 212; 214; 600) when connected to the electronic device (101; 210; 212; 214; 600);
a memory 720 configured to store computer-executable instructions; and
a processor (120; 710) configured to execute the computer-executable instructions by accessing the memory, wherein the processor (120; 710) is configured to perform:
transmitting version information of a firmware program installed on the charging device (220; 222; 224; 700) to the electronic device (101; 210; 212; 214; 600);
when receiving a notification signal for updating the firmware program from the electronic device (101; 210; 212; 214; 600), switching a signal transmission/reception mode for the signal lines from a power signal transmission/reception mode to a data signal transmission/reception mode;
receiving update data of the firmware program from the electronic device (101; 210; 212; 214; 600); and
updating, based on the received update data, a firmware program of the charging device (220; 222; 224; 700),
wherein the charging device (220; 222; 224; 700) is configured to:
when the signal transmission/reception mode is the data signal transmission/reception mode, transmit and receive a data signal to and from the electronic device (101; 210; 212; 214; 600) via the signal lines, reduce a maximum permitted voltage level of the signal lines and stop transmitting and receiving a power signal to and from the electronic device (101; 210; 212; 214; 600).

8. The charging device of claim 7, wherein the charging device (220; 222; 224; 700) is configured to:
when the signal transmission/reception mode is the power signal transmission/reception mode, transmit and receive the power signal to and from the electronic device (101; 210; 212; 214; 600) via the signal lines.

9. The charging device of claim 7 or 8, wherein the charging device (220; 222; 224; 700) is configured to perform:
when a cover of the charging device (220; 222; 224; 700) is closed, switching a signal transmission/reception mode for the power line; or
when the charging device (220; 222; 224; 700) stops charging the electronic device (101; 210; 212; 214; 600), switching a signal transmission/reception mode for the signal lines from a power signal transmission/reception mode to a data signal transmission/reception mode.

10. The charging device of any of claims 7 to 9, wherein the charging device (220; 222; 224; 700) is configured to,
when a charged amount of a battery (189; 640) of the electronic device (101; 210; 212; 214; 600) is greater than or equal to a predetermined reference value and
when a charged amount of a battery (189; 740) of the charging device (220; 222; 224; 700) is greater than or equal to a predetermined reference value,
perform receiving update data of the firmware program from the electronic device (101; 210; 212; 214; 600).

11. The charging device of claim 10, wherein, when a cover of the charging device (220; 222; 224; 700) is closed, the charging device (220; 222; 224; 700) is configured to perform receiving the update data of the firmware program from the electronic device (101; 210; 212; 214; 600).

12. A method of controlling an electronic device (101; 210; 212; 214; 600), the method comprising:
when a connection between a charging device (220; 222; 224; 700) and the electronic device (101; 210; 212; 214; 600) is detected, receiving, from the charging device (220; 222; 224; 700), version information of a firmware program installed on the charging device (220; 222; 224; 700);
when the version information of the firmware program of the charging device (220; 222; 224; 700) is different from reference version information, transmitting a notification signal for updating the firmware program to the charging device (220; 222; 224; 700) to cause the charging device (220; 222; 224; 700) to switch a signal transmission/reception mode for signal lines from a power signal transmission/reception mode to a data signal transmission/reception mode; and
transmitting, to the charging device (220; 222; 224; 700), update data of the firmware program via signal lines of which the signal transmission/reception mode is switched,
wherein the method further comprises:
when the signal transmission/reception mode is the data signal transmission/reception mode, transmitting and receiving a data signal to and from the charging device (220; 222; 224; 700) via the signal lines, reduce a maximum permitted voltage level of the signal lines and stop transmitting and receiving a power signal to and from the charging device (220; 222; 224; 700).

13. A method of controlling a charging device (220; 222; 224; 700), the method comprising:
when a notification signal for updating a firmware program is received from an electronic device (101; 210; 212; 214; 600), switching a signal transmission/reception mode for signal lines comprised in a communication module (190; 730) from a power signal transmission/reception mode to a data signal transmission/reception mode;
receiving update data of the firmware program from the electronic device (101; 210; 212; 214; 600); and
updating, based on the received update data, a firmware program of the charging device (220; 222; 224; 700),
wherein the method further comprises:
when the signal transmission/reception mode is the data signal transmission/reception mode, transmitting and receiving a data signal to and from the electronic device (101; 210; 212; 214; 600) via the signal lines, reduce a maximum permitted voltage level of the signal lines and stop transmitting and receiving a power signal to and from the electronic device (101; 210; 212; 214; 600).

## Patentansprüche

1. Elektronische Vorrichtung (101; 210; 212; 214; 600), umfassend:
ein Kommunikationsmodul (190; 630), das Signalleitungen umfasst, die dazu konfiguriert sind, ein Signal an eine Ladevorrichtung (220; 222; 224; 700) zu senden und ein Signal davon zu empfangen, wenn mit der Ladevorrichtung (220; 222; 224; 700) verbunden;
einen Speicher (130; 620), der dazu konfiguriert ist, computerausführbare Anweisungen zu speichern; und
einen Prozessor (120; 610), der dazu konfiguriert ist, die computerausführbaren Anweisungen durch Zugreifen auf den Speicher auszuführen,
wobei der Prozessor (120; 610) dazu konfiguriert ist, Folgendes durchzuführen:
wenn eine Verbindung zwischen der Ladevorrichtung (220; 222; 224; 700) und der elektronischen Vorrichtung (101; 210; 212; 214; 600) detektiert wird, Empfangen von Versionsinformationen eines Firmware-Programms, das auf der Ladevorrichtung (220; 222; 224; 700) installiert ist, von der Ladevorrichtung (220; 222; 224; 700) über die Signalleitungen;
wenn sich die Versionsinformationen des Firmware-Programms der Ladevorrichtung (220; 222; 224; 700) von Referenzversionsinformationen unterscheiden, Übertragen eines Benachrichtigungssignals zum Aktualisieren des Firmware-Programms an die Ladevorrichtung (220; 222; 224; 700), um zu bewirken, dass die Ladevorrichtung (220; 222; 224; 700) einen Signalübertragungs-/-empfangsmodus der Ladevorrichtung (220; 222; 224; 700) von einem Leistungssignalübertragungs-/-empfangsmodus in einen Datensignalübertragungsmodus umschaltet; und
Übertragen von Aktualisierungsdaten des Firmware-Programms an die Ladevorrichtung (220; 222; 224; 700) über die Signalleitungen,
wobei die elektronische Vorrichtung (101; 210; 212; 214; 600) zu Folgendem konfiguriert ist:
wenn der Signalübertragungs-/-empfangsmodus der Datensignalübertragungs-/- empfangsmodus ist, Übertragen und Empfangen eines Datensignals an die und von der Ladevorrichtung (220; 222; 224; 700) über die Signalleitungen, Reduzieren eines maximal zulässigen Spannungsniveaus der Signalleitungen und Stoppen von Übertragen und Empfangen eines Leistungssignals an die und von der Ladevorrichtung (220; 222; 224; 700).

2. Elektronische Vorrichtung nach Anspruch 1, wobei die elektronische Vorrichtung (101; 210; 212; 214; 600) zu Folgendem konfiguriert ist:
wenn der Signalübertragungs-/-empfangsmodus der Leistungssignalübertragungs-/- empfangsmodus ist, Übertragen und Empfangen des Leistungssignals an die und von der Ladevorrichtung (220; 222; 224; 700) über die Signalleitungen.

3. Elektronische Vorrichtung nach Anspruch 1, wobei die elektronische Vorrichtung (101; 210; 212; 214; 600) zu Folgendem konfiguriert ist:
wenn eine geladene Menge einer Batterie (189; 640) der elektronischen Vorrichtung (101; 210; 212; 214; 600) größer als ein oder gleich einem vorbestimmten Referenzwert ist, und
wenn eine geladene Menge einer Batterie (189; 740) der Ladevorrichtung (220; 222; 224; 700) größer als ein oder gleich einem vorbestimmten Referenzwert ist,
Übertragen der Aktualisierungsdaten des Firmware-Programms an die Ladevorrichtung (220; 222; 224; 700).

4. Elektronische Vorrichtung nach Anspruch 2 oder 3, wobei die elektronische Vorrichtung (101; 210; 212; 214; 600) dazu konfiguriert ist, wenn eine Abdeckung der Ladevorrichtung (220; 222; 224; 700) geschlossen ist, Übertragen der Aktualisierungsdaten des Firmware-Programms an die Ladevorrichtung (220; 222; 224; 700) durchzuführen.

5. Elektronische Vorrichtung nach einem der Ansprüche 1 bis 4, wobei der Prozessor (120; 610) ferner dazu konfiguriert ist, Herunterladen der Referenzversionsinformationen von einem externen Server (108; 230) durchzuführen.

6. Elektronische Vorrichtung nach einem der Ansprüche 1 bis 5, wobei die Referenzversionsinformationen Versionsinformationen von Aktualisierungsdaten eines Firmware-Programms, das in der elektronischen Vorrichtung (101; 210; 212; 214; 600) gespeichert ist, entsprechen.

7. Ladevorrichtung (220; 222; 224; 700), umfassend:
ein Kommunikationsmodul (190; 730), das Signalleitungen umfasst, die dazu konfiguriert sind, ein Signal an eine elektronische Vorrichtung (101; 210; 212; 214; 600) zu übertragen und ein Signal davon zu empfangen, wenn mit der elektronischen Vorrichtung (101; 210; 212; 214; 600) verbunden;
einen Speicher (720), der dazu konfiguriert ist, computerausführbare Anweisungen zu speichern; und
einen Prozessor (120; 710), der dazu konfiguriert ist, die computerausführbaren Anweisungen durch Zugreifen auf den Speicher auszuführen, wobei der Prozessor (120; 710) dazu konfiguriert ist, Folgendes durchzuführen:
Übertragen von Versionsinformationen eines Firmware-Programms, das auf der Ladevorrichtung (220; 222; 224; 700) installiert ist, an die elektronische Vorrichtung (101; 210; 212; 214; 600);
beim Empfangen eines Benachrichtigungssignals zum Aktualisieren des Firmware-Programms von der elektronischen Vorrichtung (101; 210; 212; 214; 600), Umschalten eines Signalübertragungs-/-empfangsmodus für die Signalleitungen von einem Leistungssignalübertragungs-/-empfangsmodus in einen Datensignalübertragungs-/- empfangsmodus;
Empfangen von Aktualisierungsdaten des Firmware-Programms von der elektronischen Vorrichtung (101; 210; 212; 214; 600); und
Aktualisieren, basierend auf den empfangenen Aktualisierungsdaten, eines Firmware-Programms der Ladevorrichtung (220; 222; 224; 700),
wobei die Ladevorrichtung (220; 222; 224; 700) zu Folgendem konfiguriert ist:
wenn der Signalübertragungs-/-empfangsmodus der Datensignalübertragungs-/- empfangsmodus ist, Übertragen und Empfangen eines Datensignals an die und von der elektronischen Vorrichtung (101; 210; 212; 214; 600) über die Signalleitungen, Reduzieren eines maximal zulässigen Spannungsniveaus der Signalleitungen und Stoppen von Übertragen und Empfangen eines Leistungssignals an die und von der elektronischen Vorrichtung (101; 210; 212; 214; 600).

8. Ladevorrichtung nach Anspruch 7, wobei die Ladevorrichtung (220; 222; 224; 700) zu Folgendem konfiguriert ist:
wenn der Signalübertragungs-/-empfangsmodus der Leistungssignalübertragungs-/- empfangsmodus ist, Übertragen und Empfangen des Leistungssignals an die und von der elektronischen Vorrichtung (101; 210; 212; 214; 600) über die Signalleitungen.

9. Ladevorrichtung nach Anspruch 7 oder 8, wobei die Ladevorrichtung (220; 222; 224; 700) dazu konfiguriert ist, Folgendes durchzuführen:
wenn eine Abdeckung der Ladevorrichtung (220; 222; 224; 700) geschlossen ist, Umschalten eines Signalübertragungs-/-empfangsmodus für die Leistungsleitung; oder
wenn die Ladevorrichtung (220; 222; 224; 700) Laden der elektronischen Vorrichtung (101; 210; 212; 214; 600) stoppt, Umschalten eines Signalübertragungs-/-empfangsmodus für die Signalleitungen von einem Leistungssignalübertragungs-/-empfangsmodus in einen Datensignalübertragungs-/-empfangsmodus.

10. Ladevorrichtung nach einem der Ansprüche 7 bis 9, wobei die Ladevorrichtung (220; 222; 224; 700) zu Folgendem konfiguriert ist:
wenn eine geladene Menge einer Batterie (189; 640) der elektronischen Vorrichtung (101; 210; 212; 214; 600) größer als ein oder gleich einem vorbestimmten Referenzwert ist, und
wenn eine geladene Menge einer Batterie (189; 740) der Ladevorrichtung (220; 222; 224; 700) größer als ein oder gleich einem vorbestimmten Referenzwert ist,
Durchführen von Empfangen von Aktualisierungsdaten des Firmware-Programms von der elektronischen Vorrichtung (101; 210; 212; 214; 600).

11. Ladevorrichtung nach Anspruch 10, wobei, wenn eine Abdeckung der Ladevorrichtung (220; 222; 224; 700) geschlossen ist, die Ladevorrichtung (220; 222; 224; 700) dazu konfiguriert ist, Empfangen der Aktualisierungsdaten des Firmware-Programms von der elektronischen Vorrichtung (101; 210; 212; 214; 600) durchzuführen.

12. Verfahren zur Steuerung einer elektronischen Vorrichtung (101; 210; 212; 214; 600), wobei das Verfahren Folgendes umfasst:
wenn eine Verbindung zwischen einer Ladevorrichtung (220; 222; 224; 700) und der elektronischen Vorrichtung (101; 210; 212; 214; 600) detektiert wird, Empfangen, von der Ladevorrichtung (220; 222; 224; 700), von Versionsinformationen eines Firmware-Programms, das auf der Ladevorrichtung (220; 222; 224; 700) installiert ist;
wenn sich die Versionsinformationen des Firmware-Programms der Ladevorrichtung (220; 222; 224; 700) von Referenzversionsinformationen unterscheiden, Übertragen eines Benachrichtigungssignals zum Aktualisieren des Firmware-Programms an die Ladevorrichtung (220; 222; 224; 700), um zu bewirken, dass die Ladevorrichtung (220; 222; 224; 700) einen Signalübertragungs-/-empfangsmodus für Signalleitungen von einem Leistungssignalübertragungs-/-empfangsmodus in einen Datensignalübertragungs-/- empfangsmodus umschaltet; und
Übertragen, an die Ladevorrichtung (220; 222; 224; 700), von Aktualisierungsdaten des Firmware-Programms über Signalleitungen, deren Signalübertragungs-/-empfangsmodus umgeschaltet ist,
wobei das Verfahren ferner Folgendes umfasst:
wenn der Signalübertragungs-/-empfangsmodus der Datensignalübertragungs-/- empfangsmodus ist, Übertragen und Empfangen eines Datensignals an die und von der Ladevorrichtung (220; 222; 224; 700) über die Signalleitungen, Reduzieren eines maximal zulässigen Spannungsniveaus der Signalleitungen und Stoppen von Übertragen und Empfangen eines Leistungssignals an die und von der Ladevorrichtung (220; 222; 224; 700).

13. Verfahren zur Steuerung einer Ladevorrichtung (220; 222; 224; 700), wobei das Verfahren Folgendes umfasst:
wenn ein Benachrichtigungssignal zum Aktualisieren eines Firmware-Programms von einer elektronischen Vorrichtung (101; 210; 212; 214; 600) empfangen wird, Umschalten eines Signalübertragungs-/-empfangsmodus für Signalleitungen, die in einem Kommunikationsmodul (190; 730) umfasst sind, von einem Leistungssignalübertragungs-/-empfangsmodus in einen Datensignalübertragungs-/-empfangsmodus;
Empfangen von Aktualisierungsdaten des Firmware-Programms von der elektronischen Vorrichtung (101; 210; 212; 214; 600); und
Aktualisieren, basierend auf den empfangenen Aktualisierungsdaten, eines Firmware-Programms der Ladevorrichtung (220; 222; 224; 700),
wobei das Verfahren ferner Folgendes umfasst:
wenn der Signalübertragungs-/-empfangsmodus der Datensignalübertragungs-/- empfangsmodus ist, Übertragen und Empfangen eines Datensignals an die und von der elektronischen Vorrichtung (101; 210; 212; 214; 600) über die Signalleitungen, Reduzieren eines maximal zulässigen Spannungsniveaus der Signalleitungen und Stoppen von Übertragen und Empfangen eines Leistungssignals an die und von der elektronischen Vorrichtung (101; 210; 212; 214; 600).

## Revendications

1. Dispositif électronique (101; 210; 212; 214; 600) comprenant :
un module de communication (190; 630) comprenant des lignes de signal configurées pour émettre un signal vers et pour recevoir un signal provenant d'un dispositif de charge (220; 222; 224; 700) lorsqu'il est connecté au dispositif de charge (220; 222; 224; 700) ;
une mémoire (130; 620) configurée pour stocker des instructions exécutables par ordinateur ; et
un processeur (120; 610) configuré pour exécuter les instructions exécutables par ordinateur en accédant à la mémoire,
dans lequel le processeur (120; 610) est configuré pour exécuter :
lorsqu'une connexion entre le dispositif de charge (220; 222; 224; 700) et le dispositif électronique (101; 210; 212; 214; 600) est détectée, la réception d'informations de version d'un programme de micrologiciel installé sur le dispositif de charge (220; 222; 224; 700) provenant du dispositif de charge (220; 222; 224; 700) via les lignes de signal ;
lorsque les informations de version du programme de micrologiciel du dispositif de charge (220; 222; 224; 700) sont différentes des informations de version de référence, l'émission d'un signal de notification pour mettre à jour le programme de micrologiciel au dispositif de charge (220; 222; 224; 700) afin d'amener le dispositif de charge (220; 222; 224; 700) à commuter un mode d'émission/réception de signal du dispositif de charge (220; 222; 224; 700) d'un mode d'émission/réception de signal d'alimentation à un mode d'émission de signal de données ; et
l'émission des données de mise à jour du programme de micrologiciel au dispositif de charge (220; 222; 224; 700) via les lignes de signal,
dans lequel le dispositif électronique (101; 210; 212; 214; 600) est configuré pour :
lorsque le mode d'émission/réception de signal est le mode d'émission/réception de signal de données, émettre et recevoir un signal de données vers et provenant du dispositif de charge (220; 222; 224; 700) via les lignes de signal, réduire un niveau de tension maximal autorisé des lignes de signal et arrêter l'émission et la réception d'un signal d'alimentation vers et provenant du dispositif de charge (220; 222; 224; 700).

2. Dispositif électronique selon la revendication 1, dans lequel le dispositif électronique (101; 210; 212; 214; 600) est configuré pour :
lorsque le mode d'émission/réception de signal est le mode d'émission/réception de signal d'alimentation, émettre et recevoir le signal d'alimentation vers et provenant du dispositif de charge (220; 222; 224; 700) via les lignes de signal.

3. Dispositif électronique selon la revendication 1, dans lequel le dispositif électronique (101; 210; 212; 214; 600) est configuré pour,
lorsqu'une quantité chargée d'une batterie (189; 640) du dispositif électronique (101; 210; 212; 214; 600) est supérieure ou égale à une valeur de référence prédéterminée et
lorsqu'une quantité chargée d'une batterie (189; 740) du dispositif de charge (220; 222; 224; 700) est supérieure ou égale à une valeur de référence prédéfinie,
émettre les données de mise à jour du programme de micrologiciel au dispositif de charge (220; 222; 224; 700).

4. Dispositif électronique selon la revendication 2 ou 3, dans lequel le dispositif électronique (101; 210; 212; 214; 600) est configuré pour, lorsqu'un capot du dispositif de charge (220; 222; 224; 700) est fermé, effectuer l'émission des données de mise à jour du programme de micrologiciel au dispositif de charge (220; 222; 224; 700).

5. Dispositif électronique selon l'une quelconque des revendications 1 à 4, dans lequel le processeur (120; 610) est en outre configuré pour effectuer le téléchargement des informations de version de référence à partir d'un serveur externe (108; 230).

6. Dispositif électronique selon l'une quelconque des revendications 1 à 5, dans lequel les informations de version de référence correspondent aux informations de version des données de mise à jour d'un programme de micrologiciel stocké dans le dispositif électronique (101; 210; 212; 214; 600).

7. Dispositif de charge (220; 222; 224; 700) comprenant :
un module de communication (190; 730) comprenant des lignes de signal configurées pour émettre un signal vers et pour recevoir un signal provenant d'un dispositif électronique (101; 210; 212; 214; 600) lorsqu'il est connecté au dispositif électronique (101; 210; 212; 214; 600) ;
une mémoire (720) configurée pour stocker des instructions exécutables par ordinateur ; et
un processeur (120; 710) configuré pour exécuter les instructions exécutables par ordinateur en accédant à la mémoire, dans lequel le processeur (120; 710) est configuré pour effectuer :
l'émission d'informations de version d'un programme de micrologiciel installé sur le dispositif de charge (220; 222; 224; 700) au dispositif électronique (101; 210; 212; 214; 600) ;
lors de la réception d'un signal de notification pour mettre à jour le programme de micrologiciel en provenance du dispositif électronique (101; 210; 212; 214; 600), commuter un mode d'émission/réception de signal pour les lignes de signal d'un mode d'émission/réception de signal d'alimentation à un mode d'émission/réception de signal de données ;
la réception des données de mise à jour du programme de micrologiciel en provenance du dispositif électronique (101; 210; 212; 214; 600) ; et
la mise à jour, sur la base des données de mise à jour reçues, d'un programme de micrologiciel du dispositif de charge (220; 222; 224; 700),
dans lequel le dispositif de charge (220; 222; 224; 700) est configuré pour :
lorsque le mode d'émission/réception de signal est le mode d'émission/réception de signal de données, émettre et recevoir un signal de données vers et provenant du dispositif électronique (101; 210; 212; 214; 600) via les lignes de signal, réduire un niveau de tension maximal autorisé des lignes de signal et arrêter l'émission et la réception d'un signal d'alimentation vers et provenant du dispositif électronique (101; 210; 212; 214; 600).

8. Dispositif de charge selon la revendication 7, dans lequel le dispositif de charge (220; 222; 224; 700) est configuré pour :
lorsque le mode d'émission/réception de signal est le mode d'émission/réception de signal d'alimentation, émettre et recevoir le signal d'alimentation vers et provenant du dispositif de charge (101; 210; 212; 214; 600) via les lignes de signal.

9. Dispositif de charge selon la revendication 7 ou 8, dans lequel le dispositif de charge (220; 222; 224; 700) est configuré pour effectuer :
lorsqu'un capot du dispositif de charge (220; 222; 224; 700) est fermé, la commutation d'un mode d'émission/réception de signal pour la ligne d'alimentation ; ou
lorsque le dispositif de charge (220; 222; 224; 700) arrête de charger le dispositif électronique (101; 210; 212; 214; 600), la commutation d'un mode d'émission/réception de signal pour les lignes de signal d'un mode d'émission/réception de signal d'alimentation à un mode d'émission/réception de signal de données.

10. Dispositif de charge selon l'une quelconque des revendications 7 à 9, dans lequel le dispositif de charge (220; 222; 224; 700) est configuré pour
lorsqu'une quantité chargée d'une batterie (189; 640) du dispositif électronique (101; 210; 212; 214; 600) est supérieure ou égale à une valeur de référence prédéfinie et
lorsqu'une quantité chargée d'une batterie (189; 740) du dispositif de charge (220; 222; 224; 700) est supérieure ou égale à une valeur de référence prédéfinie,
effectuer la réception des données de mise à jour du programme de micrologiciel du dispositif électronique (101; 210; 212; 214; 600).

11. Dispositif de charge selon la revendication 10, dans lequel, lorsqu'un capot du dispositif de charge (220; 222; 224; 700) est fermé, le dispositif de charge (220; 222; 224; 700) est configuré pour effectuer la réception des données de mise à jour du programme de micrologiciel en provenance du dispositif électronique (101; 210; 212; 214; 600).

12. Procédé de commande d'un dispositif électronique (101; 210; 212; 214; 600), le procédé comprenant :
lorsqu'une connexion entre un dispositif de charge (220; 222; 224; 700) et le dispositif électronique (101; 210; 212; 214; 600) est détectée, la réception, à partir du dispositif de charge (220; 222; 224; 700), d'informations de version d'un programme de micrologiciel installé sur le dispositif de charge (220; 222; 224; 700) ;
lorsque les informations de version du programme de micrologiciel du dispositif de charge (220; 222; 224; 700) sont différentes des informations de version de référence, l'émission d'un signal de notification pour mettre à jour le programme de micrologiciel au dispositif de charge (220; 222; 224; 700) afin d'amener le dispositif de charge (220; 222; 224; 700) à commuter un mode d'émission/réception de signal pour les lignes de signal d'un mode d'émission/réception de signal d'alimentation à un mode d'émission/réception de signal de données ; et
l'émission, au dispositif de charge (220; 222; 224; 700), des données de mise à jour du programme de micrologiciel via des lignes de signal dont le mode d'émission/réception de signal est commuté,
dans lequel le procédé comprend en outre :
lorsque le mode d'émission/réception de signal est le mode d'émission/réception de signal de données, l'émission et la réception d'un signal de données vers et provenant du dispositif de charge (220; 222; 224; 700) via les lignes de signal, la réduction d'un niveau de tension maximal autorisé des lignes de signal et l'arrêt de l'émission et la réception d'un signal d'alimentation vers et provenant du dispositif de charge (220; 222; 224; 700).

13. Procédé de commande d'un dispositif de charge (220; 222; 224; 700), le procédé comprenant :
lorsqu'un signal de notification pour mettre à jour un programme de micrologiciel est reçu d'un dispositif électronique (101; 210; 212; 214; 600), la commutation d'un mode d'émission/réception de signal pour des lignes de signal comprises dans un module de communication (190; 730) d'un mode d'émission/réception de signal d'alimentation à un mode d'émission/réception de signal de données ;
la réception des données de mise à jour du programme de micrologiciel du dispositif électronique (101; 210; 212; 214; 600) ; et
la mise à jour, sur la base des données de mise à jour reçues, d'un programme de micrologiciel du dispositif de charge (220; 222; 224; 700),
dans lequel le procédé comprend en outre :
lorsque le mode d'émission/réception de signal est le mode d'émission/réception de signal de données, l'émission et la réception d'un signal de données vers et provenant du dispositif électronique (101; 210; 212; 214; 600) via les lignes de signal, la réduction d'un niveau de tension maximal autorisé des lignes de signal et l'arrêt de l'émission et la réception d'un signal d'alimentation vers et en provenance du dispositif électronique (101; 210; 212; 214; 600).
